(19) Europäisches Patentamt
European Patent Office
Office européen des brevets

(11) **EP 3 907 928 B1**

(12) **EUROPEAN PATENT SPECIFICATION**

(45) Date of publication and mention
of the grant of the patent:
**27.08.2025 Bulletin 2025/35**

(21) Application number: **20305453.1**

(22) Date of filing: **06.05.2020**

(51) International Patent Classification (IPC):
**H04L 9/08** (2006.01)   **H04W 12/00** (2021.01)

(52) Cooperative Patent Classification (CPC):
**H04L 9/0841; H04W 12/02; H04W 12/0471;
H04W 12/63;** H04L 2209/42; H04L 2209/805

(54) **IMPROVED COMPUTER IMPLEMENTED METHOD FOR ANONYMOUS PROXIMITY TRACING**

VERBESSERTES COMPUTERIMPLEMENTIERTES VERFAHREN ZUR ANONYMEN ANNÄHERUNGSVERFOLGUNG

PROCÉDÉ AMÉLIORÉ MIS EN ŒUVRE PAR ORDINATEUR POUR LE TRAÇAGE DE PROXIMITÉ ANONYME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.11.2021 Bulletin 2021/45**

(73) Proprietors:
• **INRIA - Institut National de Recherche en Informatique et en Automatique**
**78150 Le Chesnay (FR)**
• **CENTRE NATIONAL DE LA RECHERCHE SCIENTIFIQUE (C.N.R.S.)**
**75016 Paris (FR)**

(72) Inventors:
• **CASTELLUCCIA, Claude**
**78153 LE CHESNAY CEDEX (FR)**
• **POINTCHEVAL, David**
**75016 Paris (FR)**

(74) Representative: **Vidon Brevets & Stratégie**
**16B, rue de Jouanet**
**BP 90333**
**35703 Rennes Cedex 7 (FR)**

(56) References cited:
**US-A1- 2012 266 221    US-A1- 2016 065 362**

• VILLE ; OLLIKAINEN ET AL: "This document is downloaded from the VTT's Research Information Portal https Rendezvous based pandemic tracing by sharing Diffie-Hellman generated common secrets", 9 April 2020 (2020-04-09), XP055736779, Retrieved from the Internet <URL:https://cris.vtt.fi/ws/files/33491049/Rendezvous_Based_COVID19_Tracing_VTT_Ollikainen_Halunen_Latvala_final.pdf> [retrieved on 20201005]
• GAJBHIYE SAMTA ET AL: "Bluetooth Secure Simple Pairing with enhanced security level", JOURNAL OF INFORMATION SECURITY AND APPLICATIONS, vol. 44, 18 December 2018 (2018-12-18), pages 170 - 183, XP085581343, ISSN: 2214-2126, DOI: 10.1016/J.JISA.2018.11.009

**Description**

The invention concerns the field of proximity tracing, and more particularly a computer implemented method for anonymous proximity tracing.

With the explosion of mobile devices and the development of low energy protocols, proximity tracing has become one of the prominent fields of development. With the avent of beacons, many technological cases have emerged from the retail industry, the logistics industry and others. The emergence of the COVID19 pandemic has only exacerbated this trend.

The biggest issue with all proximity tracing applications is to balance quality of information with the absolute need to guarantee privacy in order to prevent abuse. This has led to the development of two main approaches.

One is generally called "centralized" whereas the other one is generally called "decentralized", this distinction being based on the presence of a server or not. While the first reflex might be to consider "server-less (or almost)" to be safer privacy wise. However, quite counterintuitively, these solutions are actually more dangerous because the duplicate all the data of all users over the whole herd of users, and not only data hungry but actually data voracious, as they require sending a lot of irrelevant data to most of the users.

The Applicant has thus considered "centralized" approach, where a server ultimately gathers some sort of information from the users. As a first approach, the Applicant proposed a method for anonymous proximity tracing named "ROBERT", in the article "ROBERT: ROBust and privacypresERving proximity Tracing" published on April 18, 2020 accessible from https://github.com/ROBERT-proximity-tracing/documents.

ROBERT 1.0 relied on the assignment of temporary identifications to users by a centralization server, the storing of this temporary identification by other users when their device came in proximity to those of the user carrying this temporary identification, and the upload of the lists of "met in proximity temporary identifications" by a user once diagnosed with COVID19. In this manner, the centralization server did not store any personal data concerning the users, and the users could be made aware that they had come into proximity with a COVID19 positive person by checking if one of their temporary identification is listed on the centralization server.

This method is interesting but left room for improvement, particularly in order to reduce the role of the server in the protocol and make it as "server-less (or almost)" as possible.

The article by Ollikainen, V., & Halunen, K. (2020), "Rendezvous based pandemic tracing by sharing Diffie-Hellman generated common secrets", VTT Technical Research Centre of Finland. VTT White Paper discloses a computer-implemented method for anonymous proximity tracing according to the preamble of claim 1.

The invention aims at improving the situation. To this end, the Applicant proposes a computer-implemented method for anonymous proximity tracing as recited in claim 1.

This method is advantageous because the proximity server is now only used as the final repository of the result of the proximity interactions. Furthermore, due to the nature of the tokens, the proximity server is completely blind to the users and their devices, and only the two devices which are involved in the generation of the token can relate to it, while also remaining oblivious of one another. There is no spread of irrelevant data to the users, who only store anonymized data reflecting exclusively their proximity encounters. Finally, since the public keys are generated locally within each device, the resulting protocol ("ROBERT v2") can be considered "server-less (or almost)" and could even be seen as decentralized.

In various embodiments, the method may present one or more of the following features:

- said plurality of participating devices further stores a first encounter token list and a second encounter token list, wherein step c)ii. comprises computing a first token using a pseudo-random function parametrized with said current shared secret and applied on a first bucket value, and a second token using said pseudo-random function parametrized with said current shared secret and applied on a second bucket value, wherein step c) further comprises

   c)iii. computing a sorting value determined by applying a total ordering function using two inputs known by both said first participating device and said second participating device, and, based on said sorting value, either storing said first token in said first encounter token list of said first participating device and in said second encounter token list of said second participating device, and said second token in said second encounter token list of said first participating device and in said first encounter token list of said second participating device, or storing said first token in said second encounter token list of said first participating device and in said first encounter token list of said second participating device, and said second token in said first encounter token list of said first participating device and in said second encounter token list of said second participating device, and wherein step d) comprises selectively uploading at least part of one of said first encounter token list or said second encounter token list by a given participating device to a proximity management server upon detection of an uploading condition by said given participating device;

- the total ordering function computes the sorting value by comparing values derived from the respective current public keys of said first participating device and said second participating device,

- step d) comprises uploading tokens from the first encounter token list.
- the method further comprises

e) for each of said participating devices, periodically sending at least one token from said second encounter token list to the reporting server, and, upon the reporting server detecting that another participating device has uploaded a token from its first token encounter list identical to said at least one token from said second encounter token list, sending a message to the participating device having emitted said second encounter token list to the reporting server indicating this detection,

- the method further comprises

f) for each of said participating devices, periodically sending at least one token from said second encounter token list to the reporting server, computing a risk score based on the comparison between said at least one token from said second encounter token list and the tokens uploaded from the first encounter token list by other participating devices.

6. Method according to one of the preceding claims, wherein the non-interactive key exchange protocol is based on Curve25519, another elliptic curve, an Elliptic-curve Diffie-Hellman protocol or a Diffie-Hellman key exchange,

- metadata relative to the colocation of said first participating device and said second participating device is stored along said first encounter token and said second encounter token in one of said first encounter token list and said second encounter token list.

The invention also concerns a computer program comprising instructions for performing the method according to the invention, a data storage medium having recorded thereon this computer program and a computer system comprising a processor coupled to a memory having recorded thereon this computer program of claim.

Other features and advantages of the invention will readily appear in the following description of the drawings, which show exemplary embodiments of the invention and on which:

- Figure 1 represents a diagram view of a system implementing a method according to the invention,
- Figure 2 represents a generic view of the exchanges between two devices implementing the method according to the invention, and
- Figure 3 is a time-diagram showing the data exchanges following Figure 2.

The drawings and the following description are comprised for the most part of positive and well-defined features. As a result, they are not only useful in understanding the invention, but they can also be used to contribute to its definition, should the need arise.

The description may make reference or use elements protected or protectable by copyright. The Applicant does not object to the reproduction of those elements in as much as it is limited to the necessary legal publications, however this should not be construed as a waiver of rights or any form of license.

The new version uses the same architecture but introduces major improvements. In particular, it presents the concept of Private Encounter Tokens that are secret and cryptographically generated. Furthermore, the temporary identifiers that are broadcast on the Bluetooth interfaces are now generated by the mobile devices providing more control to the users. Finally, all data that are stored on the server are now encrypted using keys that are stored on the mobile devices, protecting against data breach on the server. All these modifications improve drastically the scheme privacy against malicious users and authority. As in the first version of ROBERT, risk scores and notifications are still managed and controlled by the server, and therefore the health authority, which provides high robustness, flexibility, and efficacy.

## 1 Introduction

### 1.1 Private Encounter Tokens (PETs)

As opposed to existing proximity tracing schemes, we propose an exposure notification system that is based on Private Encounter Tokens (PETs), generated from "Ephemeral Bluetooth Identifiers" (EBID). The EBIDs and PETs are generated and computed locally by the mobile devices and are unlinkable. A PET identifies an encounter between two nodes and is secret to them (nobody else can compute it). The creation of the PETs is based on Diffie-Hellman (hereinafter "DH") key exchange protocol.

For simplicity, and ease of reading, the following refers to the multiplicative DH notation. However, for efficiency reasons, we propose to implement it using an instance of the discrete logarithm on elliptic curves (also known as Elliptic-curve Diffie-Hellman or ECDH) using Curve25519 (details on Curve25519 can be found at https://en.wikipedia:org/wiki/Curve25519). We assume that the devices share the same group structure (order p and generator g), which could be pre-configured in the application.

At each epoch i:

- device X generates and broadcasts a new EBID defined as $g^{Xi}$, where Xi is a secret generated by X. With Elliptic Curve Cryptography and the elliptic curve Curve25519, $g^{Xi}$ requires 32 bytes which are transmitted in 2 consecutive Bluetooth packets (See Section 5.3 below).
- upon the reception of an EBID, $g^{Yi}$, from a device Yi, device X computes and stores in a local list $K = g^{Xi*Yi}$ and obtains PET H(K) with H() a cryptographic hash function such as SHA-256. This PET is a unique and secret identifier for the encounter between X and Y.
- 

The PET H(K) can only be computed by X and Y, and is therefore protected from eavesdroppers. This is guaranteed by the decisional Diffie-Hellman (DDH) assumption. PET has the advantage over EBID that it reduces the ability of the server to link collocation information coming from different individuals. Furthermore, this method mitigates "replay attack", where a malicious individual collects the EBIDs received by an infected (or potentially infected) individuals and replays them in many locations, thus creating a large number of false positives.

It is noteworthy that PET tokens are not specific to pandemic applications and can benefit to all other existing proximity-tracing proposals.

### 1.2 _Protocol Overview_

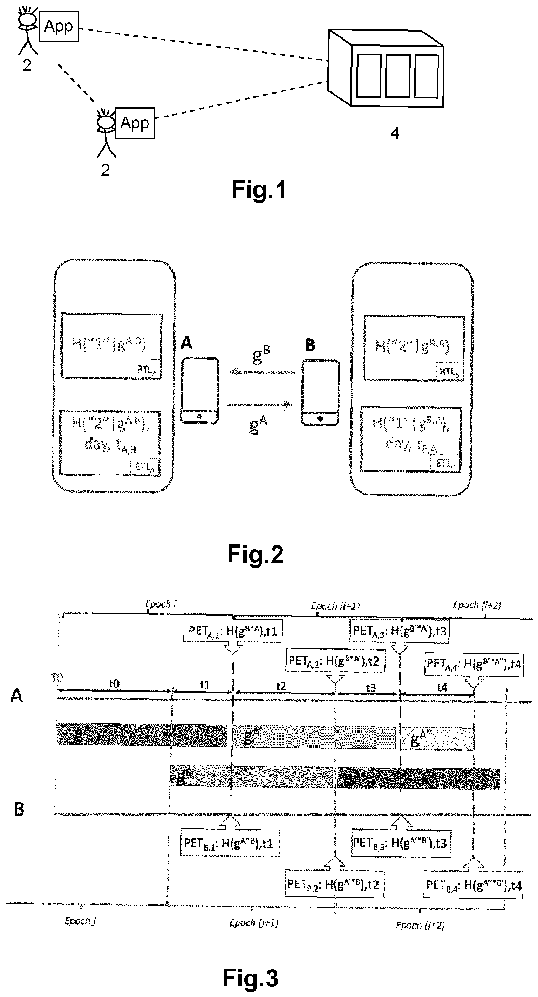

All the notations used in this paper are summarized in Table 1 below. The proposed system is shown on Figure 1 and comprises users 2 who install an Exposure Notification Application using ROBERT v2 (referenced _"App"_ or _"Apps"_ when plural), and a back-end server 4 (called reporting server below) under the control of the health authority. It is assumed that the server is configured with a well-known domain name, certificate and is highly secured.

_Table 1: Glossary of terms and variables used herein below_

| Name | Description |
|---|---|
| _App_ | Mobile application implementing ROBERT v2 |
| _AppA_ | Mobile Application installed by user 2 |
| _ATA_ | Authorization Token of user 2 |
| _BLE_ | Bluetooth Low Energy |
| _CT_ | An upper-bound on the number of days a user who has been diagnosed positive could been contagious (for example 14 days) |
| _EBID_ | Ephemeral Bluetooth IDentifier |
| _EBIDA,i_ | Ephemeral Bluetooth IDentifier generated by user 2 at epoch _i_ |
| _EKA_ | Encryption Key used of user 2 to protect his/her information in table _IDTable_ |
| _EList_ | Exposed PET tokens list on the backend server, gathering encounters from all users diagnosed COVID 19 positive who up-loaded their PETs |
| _epoch duration sec_ | Duration of an epoch in seconds |
| _ERSA_ | Exposure Risk Score of user 2 |
| _ESR REQ_ | Request sent by the _App_ to query the user Exposure Status |
| _ESR REP_ | Reply message sent by the server to users to notify their Exposure Status |
| _ETL_ | Exposure Token List maintained by _AppA_ and used to upload his/her PETs if user ser 2 is diagnosed COVID-positive |
| _IDA_ | Permanent and anonymous identifier of user 2, stored by the server |
| _IDTable_ | Database maintained by the back-end server |
| _LEDA_ | List of Exposed Days of user 2, stored in _IDTable_ |
| _PET_ | Private Encounter Token |

(continued)

| Name | Description |
| --- | --- |
| RTL | Request Token List maintained by *AppA* and used to upload his/her PETs when user 2 queries his/her exposure status |
| SREA | Variable that indicates the last epoch when user 2 has sent a "Status Request" to the server, stored in *IDTable* |
| ESR min | The minimum number of epochs between 2 consecutive *ESR REQ* |
| Tptsstart | The time when the proximity tracing service has been started |
| UNA | Flag indicating if user 2 has already been notified to be at risk of exposure. *UNA* is stored in the *IDTable* |

All communications with the server are performed through proxies (to hide users' network metadata that could be exploited by the server to re-identify users). Apps interact with the system at least through the four following procedures:

- *Initialization*: When a user wants to use the service, he or she installs the application App, from an official and trusted App store. App then registers to the server 4 that generates a permanent identifier (ID). IDTable (see Table 1) keeps an entry for each registered ID. The stored information is "de-identified" and, by no mean associated to a particular user. In other words, no personal information is stored in IDTable.
- *Proximity Discovery*: After registering to the service, each device A:

  ○ generates a new and unlinkable $EBID_A$ at each epoch
  ○ broadcasts this $EBID_A$ regularly
  ○ collects EBIDs of encountered devices
  ○ generates PET tokens from collected EBIDs if certain conditions are satisfied on, for example, contact length, received signal strength, etc.
  ○ stores the generated PET tokens in one or more local lists, along with, if necessary, additional metadata (contact length, speed, ...).

- *Infected User Declaration:* When an individual is tested and diagnosed COVID19 positive, and, after an explicit user consent and authorization (e.g. from the medical services), his/her smartphone's App uploads its local list to the authority server (hereinafter reporting server) that adds them in a global list, EList, of exposed PET tokens.
- *Exposure Status Request*: App queries (pull mechanism) the "exposure status" of its associated user by probing regularly the reporting server with its list of PET tokens. The reporting server then checks how many of the App's tokens appear in EList and computes a risk score from this information (and possibly other parameters, such as the exposure duration and signal strength). If this score is larger than a given threshold, the bit "1" (synonymous with "at risk of exposure") is sent back to the App, otherwise the bit "0" is sent back. Upon reception of a message "1", a notification may be sent to the App's user indicating the instructions to follow (e.g., go the hospital for a test, call a specific phone number, stay in quarantine, etc.).

Figure 2 shows a schematic view of the exchanges performed during the Proximity Discovery procedure described above, and will be described in greater detail in section 2.2 below.

First, device A broadcasts EBID = $g^A$ and device B broadcasts EBID $g^B$. Then, upon detecting EBID $g^B$, device A computes PET1 = H("1"|$g^{B*A}$) and PET2 = H("2"|$g^{B*A}$), stores PET1 in $RTL_A$ and PET2 in $ETL_A$. Device B computes PET1 = H("1"|$g^{A*B}$) and PET2 = H("2"|$g^{A*B}$), stores PET2 in $ETL_B$ and PET1 in $RTL_B$. According to various embodiments, the storing of PET1 in $ETL_A$ or $RTL_A$ (respectively $ETL_B$ or $RTL_B$) may depend upon the determination of a sorting value which will be described in further detail below.

ROBERT v2 protocol assumes that all the smartphones and the server are loosely time-synchronized (thanks to NTP for Network Time Protocol, or any other time synchronization mechanism like cellular mobile phone network information, or GPS time information, etc.). Time is expressed as the NTP "Seconds" value, which represents, for era 0, the number of seconds since 0h January 1st, 1900 UTC. Time is discretized into epochs (e.g., of 15 minutes, but other values can be considered depending on the proximity discovery protocol and on the application sought after, i.e. the meaning attached to the detected encounter). In the following, the variable *"epoch_duration_sec"* designates the duration of an epoch in seconds. In the example described herein, epochs are synchronized with the MAC address randomization periods.

*1.3 Risk Scoring and Notification Considerations*

Specific and effective risk scoring is out of scope of this paper. In the example described here, it is assumed that (1) the server returns a binary reply informing users that they are at risk or not and (2) the reply is only based on a calculated risk score value. These two assumptions need to be discussed. It might be useful, for several reasons, to return a probability value instead of a binary information. Furthermore, adding some randomness in the query reply mechanism could improve privacy (see Section 5.2 below).

It is further assumed that the risk assessment algorithm and its parameters should be defined and monitored by health authorities, in collaboration with epidemiologists. For pandemic applications, it is also of the utmost importance that the authority be able to adapt the algorithm and its parameters over time. These adjustments are necessary to take into account the evolution of the situation, in particular the number of exposed people, the number of infected people, the available resources, and also the progress made by epidemiology research to understand the virus and its spread. Indeed, a key success factor for proximity tracing applications is their smooth integration within the existing healthcare infrastructure, in particular the possibility to adapt the response to the local epidemiological situation and the available resources. This calls for a system where the exposure risk scores and the notifications are managed by the reporting server. The same remains true for other technical cases relating to the retail industry or the logistics industry.

The main driver of the approach presented herein is that it lets the health services run analytics on data and send warnings only to those who are most at risk of having got infected.

A major issue is the subsequent management of the alerts, within the existing proximity tracing framework (which also involves manual contact tracing, testing, quarantining, etc.). If the infrastructure is not sufficiently sized and equipped to deal with all warnings, the proximity tracing application could be useless, anxiety-provoking (because of the lack of care for individuals) and economically devastating (through the immediate, though unnecessary, withdrawal of essential workers). The "centralized" approach to risk assessment and notifications makes it possible to avoid excessive warnings that could lead either to panic reactions or loss of interest or trust from the users.

Another benefit of the central role of the server is that it increases the resilience of the system against attackers trying to identify infected users. To summarize, digital proximity tracing tools should be deployed as one element of a public health policy and should work in synergy with other existing measures under the control of the public health authority. This is an essential functional requirement of any practical pandemic or healthcare related exposure notification solution that seems to be incompatible with a truly decentralized approach. To be more precise, as an example, in a decentralized approach, where the risk calculation algorithm is computed on users' devices, the health authority is not aware of the number of exposed people. This information alone is essential both for statistical purposes and to allow to adjust the risk calculation algorithm in a practical manner.

## *2 ROBERT v2 Protocol Description*

### *2.1 Application Initialization*

A user 2 who wants to install the application on his device must download it from the official Apple or Google Play Stores. After installing the application AppA, user 2 needs to register to the back-end server.

The registration phase is composed of two phases: the authorization token generation, during which the user obtains an anonymous authorization token, and the user registration where the user registers to the server anonymously.

As we will see these phases are un-linkable and provide full anonymity to user.

*1. Authorization Token Generation:* The step is used by the user to obtain an anonymous authorization token that is used in the User registration and Exposure Status Request phases. This could be performed by using blind signatures as described in Section 5.1 below. It should be noted that, although the user reveals his phone number (to verify that there is only one application App registered per smartphone to limit Sybil attacks), the server is unable to link the user's phone number with the generated authorization token.

2. User Registration: Once the user 2 has obtained an authorization token, $AT_A$, he can use it to register to the server. This is performed as follows:

a) User 2 sends a registration message which includes his authorization token, $AT_A$.
b) The server verifies the authorization token, creates a unique identifier $ID_A$ and an entry in its IDTable. In the example described herein, the entry table contains, for each registered user, the following information:

- $ID_A$ ("Permanent IDentifier for A"): an identifier that is unique for each registered App, and generated randomly (random draw process without replacement to avoid collision).
- $UN_A$ ("User A Notified"): this flag indicates if the associated user has already been notified to be at risk of exposure (associated value being "true") or not (associated value being "false"). It is initialized with value "false".

- SRE$_A$ ("Status Request Epoch"): an integer that indicates the last epoch when user 2 has sent a "Status Request".
- LEPM$_A$ ("List of Exposed PET Metadata"): This list reflects the exposure of the user (temporal and frequency information) and is used to store the metadata (e.g. the duration and proximity of a contact to a person diagnosed as COVID19 positive) necessary to compute the risk score. In this version of the protocol, each element encodes the day when the user had a contact with a user diagnosed as COVID19 positive, and the duration of that encounter. The information contained in this list can be extended to include other types of data useful to compute the risk score, such information about the environment (indoor or outdoor), signal strength, ...
- ERS$_A$ ("Exposure Risk Score") : Current user's exposure risk score.

c) The server:

i. generates an encryption key EK$_A$
ii. sends ID$_A$, EK$_A$ to user 2
iii. uses EK$_A$ to encrypt all elements of IDTable[ID$_A$], except for ID$_A$. Here, it is advantageous to use an authenticated encryption scheme.
iv. deletes EK$_A$

The server also stores all the AT tokens it has received in order to verify that they have been used only once. As an alternative, the server can generate authorization tokens AT that are only valid for a certain number of days (e.g. by changing his Public/Private key pair periodically), which allows to reduce the storage load on the server.

### 2.2 Encounter discovery

Each node A maintains two tables: an Exposure Token List, ETL$_A$, and a Request Token List, RTL$_A$.
At each epoch i of a given day, node A:

1. deletes A$_{i-1}$ and EBID$_{A,i-1}$
2. chooses randomly A$_i$ and computes EBID$_{A,i}$ = $g^{Ai}$
3. broadcasts regularly EBID$_{A,i}$ over Bluetooth
4. cleans RTL$_A$ and ETL$_A$ by removing expired elements, i.e. elements that were included more than CT days ago. Advantageously, in the example described herein, CT is the length of the contagious period (typically 14 days).

At each encounter with node B, node A:

1. collects EBID$_{B,i}$ = $g^{Bi}$, from encounter B.
2. if the encounter meets some predefined conditions, node A:

a) computes the duration of the encounter, t$_{A,B}$
b) computes two distinct PETs:

$$PET1_i = H("1"| g^{Ai*Bi}) \text{ and } PET2_i = H("2"| g^{Ai*Bi})$$

c) If (the bit-string $g^{Ai}$ is greater than bit-string $g^{Bi}$) node A stores PET1$_i$ in RTL$_A$ and the tuple (PET2$_i$; t$_{AB}$; day) in ETL$_A$,
d) Else node A stores PET2$_i$ in RTL$_A$ and the tuple (PET1$_i$; t$_{AB}$; day) in ETL$_A$.

3. deletes $g^{Bi}$

As shown above, device A encodes each encounter with device B into two PETs, PET1 and PET2, which are stored in two different lists, ETL$_A$ and RTL$_A$. As we will see later, one of the lists (RTL$_A$) is used to query the reporting server for exposure, while the other (ETL$_A$) is uploaded to the reporting server if the user of device A is diagnosed COVID19 positive.
These two lists are related to the same encounter, and are generated on device A and B in such a manner that each token of list $ETL_A$ of device A will be stored in list $RTL_B$ of device B. Thus, if the user of device A is diagnosed COVID19 positive, users B can poll the reporting server with their tokens from list $RTL_B$ to be informed of their proximity encounter with a person diagnosed COVID19 positive. At the same time, because the tokens of lists $ETL_A$ and $RTL_A$ relating to the same encounters cannot be linked to one another (except by device A), the reporting server is prevented from de-anonymizing user A by comparing the polling tokens from list $RTL_A$ in its ESR_REQ requests and the tokens of list $ETL_A$. Without this protection, the reporting server could use these links to reconnect together the tokens of its list $ETL_A$ and derive the user of device A's proximity graph.

In general, a device A, broadcasting $EBID_A$, that is in contact with another device B, broadcasting $EBID_B$ since time $t_b$ generates a new PET token if device A starts using a new EBID, $EBID_{A,i+1}$, at time $t_e$, or device A does stops receiving $EBID_B$ since a time $t_f$ for a chosen duration (this value being a parameter). The latter case can occur when device B changes its $EBID_B$ from $EBID_{B,i}$ to $EBID_{B,i+1}$ or when device B has moved away from device A or is temporarily behind an obstacle.

According to various situations, devices may be led to generate several PETs for a single continuous proximity encounter. The invention allows to control this situation.

Figure 3 shows various PETs that can be generated by two devices A and B, taking into account the above rules, and the loose time synchronization between devices A and B. It allows to understand the extent to which the invention allows anonymous proximity encounters detection in a truly decentralized context.

On this figure, device A starts broadcasting $g^A$ at time T0. It encounters device B at time T0 + t0. At time T0 + t0 + t1, device A changes its EBID. As a result, device A generates the $PET_{A,1}$ $H(g^{B*A})$ and stores it together with its duration t1. Similarly, at time T0+ t0+ t1, device B does not receive $g^A$ anymore - therefore it generates the $PET_{B,1}$ $H(g^{A*B})$ and stores it together with its duration t1. Then when device B changes its EBID at a time T0+t0+t1+t2, device B generates the $PET_{B,2}$ $H(g^{A'*B})$ and stores it together with its duration t2. Similarly, at time T0+ t0+ t1+t2, device A generates the $PET_{A,2}$ $H(g^{B*A'})$ and stores it together with its duration t2, and so on, until the encounter between device A and device definitely ends at a time T0+ t0+ t1+t2+t3+t4.

### 2.3 Infected device declaration

If user 2 is tested and diagnosed COVID19 positive at a hospital or medical office, he/she is proposed to upload each element of his/her $ETL_A$ list to the server. For example, a possible solution is that user 2 obtains an authorization code from the hospital or the medical office once diagnosed COVID19 positive. The user 2 can then use this code to obtain N anonymous authorization tokens, where N is the number of elements in user 2's $ETL_A$ list (see Section 5.1 for example). User 2 can then use these tokens to upload each of his/her App's ETLA's elements one by one to the reporting server. The specific interactions between AppA and the health authority are not described in detail here since they can differ from one medical system to another and do not constitute the crux of the invention. Advantageously, this/these uploads are made anonymously, in particular they do not reveal the identity of user 2 nor any of its EBIDs to the reporting server.

If insufficient precautions are taken, the upload of $ETL_A$ could potentially be used by the reporting server to build the de-identified social/proximity graph of the user 2 which has been diagnosed COVID19 positive. The aggregation of many such social/proximity graphs could lead, under some conditions, to the de-anonymization of its nodes, which would result in the social graphs of the users. In order to "break" the link between any two elements of $ETL_A$, instead of performing a single step upload of $ETL_A$, the invention proposes uploading each of its elements independently and in random order. Different solutions can be envisioned to achieve this:

- Each element of $ETL_A$ are sent to the server one by one using a Mixnet or a proxy. As a result, because the upload is spread over a long period of time, the reporting server will not be able to associate them with a specific ETL.
- The $ETL_A$ is uploaded to a trusted server (for example at a hospital or health organization). The trusted server mixes elements from different ETLs, and proceeds to the upload on the reporting server. The reporting server then can only access the exposed entries via a specific API provided by the trusted server.
- The reporting server is equipped with a secure hardware module that processes the uploads of the ETLs. The reporting server then only has access to the exposed entries via a specific API provided by the secure hardware module.

The reporting server thus maintains a global list, EList, of all exposed tuples (token; day; t) coming from all users which have been diagnosed COVID19 postive. Because the devices flush irrelevant data periodically, it is guaranteed that only relevant tokens are uploaded to the reporting server. Alternatively, the reporting server may also flush its tokens on a regular basis once the tokens are not relevant anymore.

### 2.4 Exposure Status Request

In order to check whether user 2 is "at risk", i.e., if he/she has encountered infected and/or contagious users in the last CT days, application AppA regularly sends "Exposure Status" Requests (ESR_REQ) to the reporting server for $ID_A$. For example, these queries are sent regularly and at most every ESR_min epochs. For example, if a user is allowed to perform N queries per day, ESR_min is defined as T = 86400/(N*epoch_duration_sec). The reporting server then computes a "risk score" value. The reporting server replies with an ESR_REP message that is set to "1" when the "risk score" is larger than a threshold value which means that the user is "at risk" or to "0" otherwise.

This can be done for instance as follows:

1. Device A periodically sends to the reporting server, via a TLS proxy, an $ESR\_REQ_{A,i}$ message that contains $ID_A$, $EK_A$, and some or all of the PET tokens of $RTL_A$.
2. The reporting server retrieves $IDTable[ID_A]$, decrypts each of its elements with $EK_A$.
3. The reporting server verifies if $(i - SRE_A)$, where i is the current epoch number, is lower than a threshold ESR_min (in order to limit the number of daily requests performed by each user). If this is the case, the server returns an $ESR\_REP_{A,i}$ message with an error code. The server then encrypts each element of $IDTable[ID_A]$ with $EK_A$ and erases $EK_A$. Otherwise, it continues.
4. The reporting server verifies the $UN_A$ flag. If the $UN_A$ is set to "true", the reporting server returns the same $ESR\_REP_{A,i}$ message set to "1" (denoting that the user is at risk of exposure). It is good practice for an application App which user is already notified "at risk" to continue to send $ESR\ REQ_{A,i}$ messages and receive valid answers in order to make this application's traffic undistinguishable from that of the applications of the other users when observing the network traffic. The server then encrypts each element of $IDTable[ID_A]$ with $EK_A$ and erases $EK_A$. Otherwise, it continues.
5. The reporting server then checks whether any of the PET tokens of $RTL_A$ appear in any tuple (token; day; t) of EList. If yes, the server removes the matching tuples from EList and adds all the (day; t) pairs in the $LEPM_A$ list of IDTable $[ID_A]$.
6. The reporting server computes an exposure risk score for user 2, stores it in $IDTable[ID_A]$ (in the field $ERS_A$). Alternatively, the reporting server could also store the RTL tokens generated in the last CT in IDTable. It would save some bandwidth since a given device would only need to send its "new" tokens daily in its ESR_REQ queries. In addition, this would improve security on the devices, which would only locally store the daily tokens.
7. Two situations are then possible:

> a) If the computed risk score indicates that the user is at risk of exposure, the server sets the flag $UN_A$ to "true". An $ESR\_REP_{A,i}$ message set to "1" (indicating a user at risk of exposure) is then returned to the user 2.
> b) If the computed risk score does not indicate any significant risk, an $ESR\_REP_{A,i}$ message set to "0" is returned to user 2.

8. After sending the reply message, the reporting server encrypts each element of $IDTable[ID_A]$ with $EK_A$ and erases $EK_A$.
9. If $ESR\_REP_{A,i}$ is set to "1", user 2 receives a notification from AppA with predetermined instructions (for example to go to the hospital to get tested, to call a specific number or go on quarantine, ...).

Note that, for a given user using a device A, since the PET tokens used in the uploaded list $ETL_A$ and in the requests $RTL_A$ are different for the same encounters, the server cannot link these elements and cannot build any proximity graph.

Furthermore, the only information that leaks out of a request is the number of elements, which could give some information about the number of encounters contained in $RTL_A$. One solution is to set the number of elements in the request to a fixed value T. If the number of elements of $RTL_A$ $N_A$ is smaller than T, $App_A$ can pad its request with $(T - N_A)$ bogus tokens. If the number of elements $N_A$ is larger than T, the $App_A$ will only use T elements of $RTL_A$ for its requests. Other variants could include encoding the elements of $RTL_A$ into a Bloom or Cuckoo filter.

### 2.5 Notified device management

When a device is notified that its user is at risk, its $UN_A$ flag is set to true in IDT able. From this point on, the reporting server processes its ESR_REQ queries as usual, but will keep replying with a ESR_REP message set to "1" regardless of the result of the ESR_REQ queries.

When set "at risk", the notified device user has several options:

- He/she is tested and diagnosed as COVID19 positive.

○ In that case he/she can upload his/her $ETL_A$ list as described in Section 2.3.

○ Independently, he/she can inform the server that her identifier $ID_A$ was tested positive via a specific protocol (not specified in this document). This notification is done independently of the previous $ETL_A$ list upload and cannot be linked together (the reporting server cannot identify the PET tokens that were uploaded by $ID_A$). This information is essential for the heath authority to calibrate the risk score function.

- He/she is tested and diagnosed as COVID19 negative.

○ He/she can inform the reporting server that his/her identifier $ID_A$ was tested negative via a specific protocol (not specified in this document). As a result, the $UN_A$ flag is reset to "false" on the reporting server.

- He/she decides not to be tested or not to inform the reporting server about the result of his/her test.

○ In that case his/her "at risk" status may be reset after a certain fixed period of time (3-4 days, value to be defined).

In any case, an application that has been notified "at risk" continues to send and receive EBIDs and to compute PETs. This is required for instance when a user is waiting for a test result. If the latter turns out to be negative, encounters continue to be recorded, and as soon as the user unlocks his/her status at the reporting server, the updated exposure status can be computed without any gap in the history.

A user that was diagnosed positive should have the option to continue using the application as long as he/she is contagious. During this period, he/she must regularly upload her ETL list to the server.

Of course, the above procedure needs may be reviewed with epidemiologists and the health authority, and is therefore subject to modifications.

## 3 *Privacy preservation*

### 3.1 *Server data breaches*

The server only stores pseudonymous data. In addition, this information is minimized and only used to compute the exposure risk scores. Furthermore, each entry in IDTable of a device A is encrypted using a key $EK_A$ which is stored only on device A and provided to the reporting server with the ESR_REQ queries.

As a result, in case of a data breach of the server, all useful information will be encrypted. The risk associated with a data breach is then minimal.

### 3.2 *Passive eavesdropping/Tracking (by malicious users and authority)*

Since PET tokens are unique to each encounter and are computed locally, passive eavesdroppers only get the EBIDs, and those change at every epoch. Furthermore, if the authority deploys some Bluetooth receivers, it will not be able, as a result of the decisional Diffie-Hellman (DDH) assumption, to relate any EBID (i.e., $g^{Ai}$) to any PET tokens. Passive tracking by the server or users is therefore not possible.

### 3.3 *Active eavesdropping/Tracking (by malicious users)*

Active Eavesdropping/Tracking by users is not possible.

### 3.4 *Active eavesdropping/Tracking (by malicious authority)*

If the authority is active and deploys Bluetooth devices that also broadcast their own EBIDs, containing for example $g^Z$, a target device A will generate and store the PET tokens $H("1"|g^{A*Z})$ and $H("2"|g^{A*Z})$. The reporting server's devices can also generate the same tokens that the server could use to identify the target's ESR REQ messages and possibly track some of its locations. Since the ESR_REQ queries of a device are linkable (since they contain de $ID_A$ of the user), with enough of these tracking devices, the server could possibly re-identify some users.

### 3.5 *Reconstructing social interaction graphs (by malicious authority)*

When a user of a device A is diagnosed COVID19 positive, he anonymously uploads all elements of its $ETL_A$ independently, as described above. Consequently, the reporting server is not able to make any links, neither between the user and the uploaded PET tokens, nor between the uploaded PET tokens themselves.

When the user of device A queries the server for its exposure status, the server is able to link $ID_A$ to all PET tokens contained in the ESR_REQ query. However, the PET tokens used in the ESR_REQ queries are different from the tokens uploaded to the reporting server if the user of device A was to ever gets diagnosed. Consequently, the reporting server is not able to infer any link between exposed tokens in its EList and tokens in exposure requests.

Furthermore, when two users of respective devices A and B who exchanged EBIDs and built associated PET tokens, request the server with an exposure request, they do so with different tokens. The reporting server is thus not able to link any tokens in those requests.

### 3.6 Infected device re-identification (by malicious user)

No user can identify infected contacts since this information is kept on the server and users only get their own exposure risk score. However, the "one entry" attack, that is inherent to all schemes is still possible.

In such an attack, the adversary has only one entry, corresponding to $User_T$, in his/her local lists (this can easily be achieved by keeping the Bluetooth interface off, and switching it on when the adversary is next to his/her victim and then switching it off again). When the adversary is notified "at risk", he/she learns that $User_T$ was diagnosed COVID19 positive.

This attack could be mitigated by:

- requiring users to register in order to limit Sybil attacks
- limiting the number of requests that each node can perform per day and by limiting it even more when a user is notified "at risk". This counter-measure limits the scale of the attack
- using a probabilistic notification scheme, as presented in Section 5.2
- sending an ESR_REP set to "1" only if the number of exposed tokens of the requesting user is strictly larger than 1
- having the server verify that the requests contain at least N tokens before providing a reply "1". However, this counter-measure does not prevent an adversary from using fake tokens with the target token

### 3.7 Replay attacks

Not possible since it is assumed that the communication is symmetrical. For example, if a malicious device E, replays the $EBID_C$ to device A. Device A will compute and store the corresponding PET1 and PET2. However, device C will not have these values in his RTL and ETL tables.

### 3.8 Relay attacks

Only possible within, at most, one epoch.

### 3.9 False Alert Injection Attacks

The pollution is an attack where a malicious node colludes with a diagnosed user to include the identifiers of some victims in his/her contact list. The goal of the malicious adversary is to make the App of a target victim raise false alerts.

This attack requires that the colluding user and the victim interact to compute their PETs. Such attacks are therefore only possible via a relay attack.

## 4 State-less version of ROBERT v2

As shown above, in ROBERT v2, the reporting server stores some information about registered users. This information is minimal and is securely stored. The Applicant has discovered that this feature is a strength of the invention's scheme since it allows to mitigate some attacks, e.g. by controlling the number of registered users and limiting the request frequency.

It also allows the health authority to compute and update the risk score according to the evolution of the situation, and provides information to the health authority about user exposures that could be very valuable to optimize the risk score function, as discussed in Section 1.3. In other technical cases, it allows for an easier adaptation of the system to an evolving paradigm.

Having said that, it is possible to transform ROBERT v2 into a state-less system where the reporting server would be a mere "matching machine" between the ETL list PET tokens that are uploaded by users diagnosed COVID19 positive and the RTL list tokens that are contained in the ESR_REQ queries.

The protocol could then be operated as follows:

- Application Initialization

Users do not need to register to the server. They only need to obtain CT different anonymous authorization tokens AT per day. Each of these authorization tokens should only be valid for a specific day and could be obtained, in batch, during registration. For example, a user would obtain CT tokens per day, under CT different keys (and different every day: a token usable today for di, for $d_{i-1}$, for $d_{i-2}$, ... a token usable tomorrow for $d_{i+1}$, di, $d_{i-1}$, etc,). A specific signing key is used for each role of the token. This is in the same vein as done in on-line e-cash schemes 'a la Chaum' with blind signatures.

- Encounter Discovery

As in the above described ROBERT v2 protocol.

- Infected Device Declaration

As in the above described ROBERT v2 protocol.

- Exposure Status Request

Users query the reporting server with unlinkable ESR_REQ queries, which each contains a subset of different $RTL_A$'s elements. Each ESR_REQ query can, for example, contain the PET tokens generated during the same day. In this case, on each day di, a user sends CT different and unlinkable ESR_REQ queries (one containing the tokens generated during di, one containing the tokens generated during $d_{i-1}$, ... , one containing the tokens generated during $d_{i-CT}$).

The reporting server processes each of these ESR_REQ queries independently, by checking whether any token contained in the request appears in its list of exposed tokens EList. It then computes the resulting exposure risk score of each request and sends back the result to the requesting device.

Note that with this extension, the reporting server cannot compute the user's "global" exposure risk scores anymore, but only unlinkable "daily" risk scores. The device obtains CT different risk scores (for the different CT previous days) that it needs to aggregate into a global one. This also implies that all Apps have to include an aggregation function that may require to be updated on a regular basis.

Lastly, it is also possible to fully decentralize the risk assessment by publishing to all phones the exposed PET tokens contained in EList of the server. The resulting scheme would then be very similar to other so-called "decentralized" approaches, such as DP3T. However, the Applicant finds this approach unsatisfying as to it would decrease resiliency against infected device re-identification. Furthermore, this full decentralization of the risk score computation could lead to the generation of many uncontrollable notifications. This could have a dramatic impact in the population, reduce the trust in the system, and consequently, its adoption rate (see Section 1.3 above).

## 5 *Appendix*

### 5.1 *Authorization Token Generation*

Let's assume that the server has a RSA certicate with public key (e, n) and private key (d, n).

The following is performed using a TLS proxy channel.

User ------> phone_number ------> server

Server computes ID = H(phone_number) and checks that ID does not exist. Server sends a code PIN to the user via SMS. The SMS is used to verify that the user owns the phone number, hence the device. Note that the PIN code could be obtained via another mechanism, if the user does not have a sim card. For example, it could be delivered by doctors or the medical authority via, for example, email. The user generates two random c and R, computes $c^e.H(R)(\bmod n)$ and sends:

> User ------> PIN, $c^e.H(R)(\bmod n)$ ------> server
> The server verifies PIN and computes REP = $(c^e \cdot R)^d = c{:}H(R)^d(\bmod n)$
> User <------ REP = $c.H(R)^d(\bmod n)$ <------ Client

The user computes sigma = REP/c = $H(R)^d(\bmod n)$ and obtains the authorization token (R, sigma).
The server deletes phone number and the REP.

The user can then use his authorization token to prove that he is a registered user when sending ESR_REQ queries or during the registration phase.

However, although the user reveals his phone number to verify that there is only one application registered per smartphone to limit Sybil attacks, the server is unable to link the user's phone number with the generated authorization token as it cannot link the token (R, sigma) to any phone number.)

It should be noted that a user who uninstalls the application will not be able to register a new application at a later time. If this is problematic, a solution would be to authorize a limited number (i.e., 2 or 3) of user registrations per phone number.

### 5.2 Probabilistic Notifications

As described in the article *"Analysis of DP3T"* by Serge Vaudenay.Cryptology ePrint Archive, Report 2020/399, 2020, all proximity-tracking schemes are vulnerable to the "one entry" attack.

As explained in Section 3.6 above, in this attack, the adversary has only one entry, corresponding to $User_T$, in his/her local lists. When the adversary is notified "at risk", he/she learns that $User_T$ was diagnosed COVID19 positive.

As described in Section 3.6, ROBERT v2 proposes some mitigation measures.

The Applicant considers that the only way to prevent this attack is to use probabilistic notifications in order to introduce some "deniability". In such a scheme, the server that receives a ESR_REQ message would reply:

"0" (i.e., not at risk) if the user's ID is not in the list of exposed IDs

"1" if the user's ID is in the list of exposed IDs or if it is randomly selected by the server (the server is arranged to select additional users who should have received a "0" reply to receive a "1" reply with a probability p).

As a result, if the user receives a "1" reply, he/she does not know whether it is because he/she has been exposed, or whether he/she has been randomly selected by the server. Since the user cannot query the server anymore (because it already received a "1" reply back), he/she cannot send additional requests to refine his/her attack. While this attacks still remains possible by n colluding nodes that target one user, in this case, the n colluding nodes will all get a "1" back and will find out the exposure status of their victim. The scalability of the attack is however reduced since it now requires n adversaries to target one victim.

The side effect of this proposal is that it introduces some false positives, i.e., some people will be notified albeit not being actually "at risk" (at least according to the risk score). The acceptability of this tradeoff lies in several elements. First, one needs to acknowledge that proximity tracing is not perfect, and that there will be anyway false positives or false negatives. In this context, it is not necessarily problematic to add 5% or 10% more false positives. Second, the application for which the system is used also plays a great role - if the App is used to target users that should get tested, testing 5 or 10% more users randomly should be quite acceptable, but if the App is used to notify users to go in quarantine, false positives could be more problematic.

### 5.3 Bluetooth communications

Identifiers broadcasted over Bluetooth, EBIDs, are now larger than 16 bytes and can therefore not be carried by an advertisement packet alone. The inventions proposes two solutions to transmit this larger message over Bluetooth.

#### 5.3.1 A scan response-based approach

To transmit the 256-bit identifier $EBID_{A,i}$ over BLE (Bluetooth Low Energy), the invention proposes using the scan response mechanism of BLE [8, Vol 3, Part B, sec. 4.4.2.3]. The 256-bit identifier is to be split into two blocks of 16-bytes, the first block is included in the advertising data of ADV_IND packets while the second block is included in the in the advertising data of SCAN_RSP packets (see Tables 2 and 3 below).

### Identifier segmentation

The 256 bit identifier $EBID_{A,i}$ is split in to two blocks: $ID_L = LSB_{16}(EBID_{A,i})$ and $IDH = MSB_{16}(EBID_{A,i})$, where $MSB_{16}(x)$ and $LSB_{16}(x)$ are functions that return respectively the 16 most significant bytes and the 16 least significant bytes of x.

Table 2 - ADV_IND

| Flags (3 bytes) | | | Complete 16-bit Service UUID (4 bytes) | | | Service Data - 16-bit UUID (22 bytes) | | | | | |
|---|---|---|---|---|---|---|---|---|---|---|---|
| Length | Type | Flags | Length | Type | Service UUID | Length | Type | | Service Data | | |
| 0x02 | 0x01 (Flag) | 0x1A | 0x03 | 0x03 (comp 16-bit service UUID) | 0xFD01 (Risk notification service 1) | 0x15 | 0x16 (Service Data - 16-bit UUID) | 0xFD01 (Risk notification service 1) | 16 bytes ID_L (First part of the identifier) | 1 byte Version | 1 byte Tx power |

Table 3 - SCAN_RSP

| Complete 16-bit Service UUID (4 bytes) | | | Service Data - 16-bit UUID (20 bytes) | | | |
|---|---|---|---|---|---|---|
| Length | Type | Service UUID | Length | Type | Service Data | |
| 0x03 | 0x03 (comp 16-bit service UUID) | 0xFD02 (Risk notification service 2) | 0x13 | 0x16 (Service Data - 16-bit UUID) | 0xFDO2 (Risk notification service 2) | 16 bytes ID_H (Second part of the identifier) |

## 5.3.2 Dedicated services

Each of those blocks is configured as data for a service. To this aim, two dedicated services are defined: Risk notification service 1 (RNS1), with 16bit UUID 0xFD01, will carry $ID_L$ along with metadata (protocol version and Tx power), and Risk notification service 2 (RNS1), with 16bit UUID 0xFD02, will carry $ID_H$.

## 5.3.3 Advertising and scan response payload

The payload of advertising packets is composed of:

○ Flags (3 bytes)

○ Complete 16-bit UUID (4 bytes) carrying the UUID of Risk notification service 1 (0xFD01)

○ Service Data - 16-bit UUID (22 bytes) carrying the data for Risk notification service 1, i.e. $ID_L$ (16 bytes), protocol version (1 byte) and Tx power (1 byte).

The payload of scan responses is composed of:

○ Complete 16-bit UUID (4 bytes) carrying the UUID of Risk notification service 2 (0xFD02)
○ Service Data - 16-bit UUID (20 bytes) carrying the data for Risk notification service 2, i.e. $ID_H$ (16 bytes)

It was assumed that the rotation of EBID is synchronized with the device address. Therefore, the two blocks $ID_L$ and $ID_H$ can be linked via the device address. If it were not the case, an additional identifier must be included in the payload of advertising and scan response packets to allow the reconstruction of the EBID.

## 5.3.4 Advertising and scanning

As stated in Bluetooth specifications [8, Vol 3, Part B, sec. 4.4.2.3], after receiving an advertisement packet (ADV_IND PDU), a scanner can send a scan request (SCAN_REQ PDU) or request additional information about the advertiser. If the advertiser receives a SCAN REQ PDU that contains its device address it shall reply with a SCAN RSP PDU on the same primary advertising channel index.
Devices are to be configured to follow this request response mechanism. More specifically, a device should always send a scan request to in response to a new advertisement packet, and, upon reception of a scan request, a device should always respond with as scan response.

## 5.4 Fragmentation approach

Another solution is to rely on splitting the $EBID_{A,i}$ in two blocks and transmitting those blocks alternatively in advertising packets.
More specifically, the $EBID_{A,i}$ is divided into two blocks $ID_L$ and $ID_H$ following the approach presented in Section 5.3.1. Those blocks are transmitted in the payload of advertisement packets (ADV_IND PDU) as service data associated to a dedicated service (e.g., Risk notification service 1 with UUID 0xFD01, as presented in Section 5.3.2). The service data in transmitted advertising packets alternatively take the value of $ID_L$ and $ID_H$.

## 6 Extensions

*6.1 Non COVID19 related two-PETs based methods*

The invention, while heavily described in the context of COVID19 exposure management, actually lays itself to a variety of other situations.

The invention can be applied to any situations where two devices A and B needs to privately and securely prove their colocation(s) to a third entity without even interacting.

Broadly speaking, many of the features of the above described embodiments can be replaced, e.g.:

- Instead of a Curve25519, another elliptic curve, or ECDH can be used, or any type of Non-Interactive Key Exchange Protocol ("NIKE"s, described in the article by Freire E.S.V., Hofheinz D., Kiltz E., Paterson K.G. (2013) "Non-Interactive Key Exchange" In: Kurosawa K., Hanaoka G. (eds) Public-Key Cryptography - PKC 2013. PKC 2013. Lecture Notes in Computer Science, vol 7778. Springer, Berlin, Heidelberg), such as a basic Diffie-Hellman key protocol,
- Instead of Bluetooth and BLE, any other wireless transmission protocol can be used, whether radio (WiFi, etc.) or airborne (by ultrasounds) or by light modulation,
- The function H() described herein is a hash function. In alternative embodiments, it may be any pseudo-random function having similar results,
- Different metrics and/or metadata can be used and associated to the PET according to the types of encounters being monitored and the information sought after, such as the duration, speed during the encounter, whether the encounter happened outside or inside, the instantaneous density (i.e. how many EBIDs were visible), etc.
- In the above, the values of the PETs are assigned to the lists ETL and RTL by comparing the values of $g^A$ and $g^B$. The aim here is to define an order between A and B based on inputs known by both A and B without there being a need for further communication. More generally, this could be done by implementing a total ordering function which, given two inputs known by A and B, outputs a sorting value defining an order between A and B.

Moreover, the above relates to a specifically robust and anonymizing method for an application to pandemic management. However, lighter versions may be used to serve other case studies. For instance, instead of computing two PETs and storing them in two lists to prevent malicious reporting server activities, only one PET may be generated. Then for instance, if one of the devices is a fixed device, it may use its interaction encounter tokens to evaluate the efficiency of various policies. For example, this fixed device may be positioned close to a communication media or close to an element which the object of a communication media, and the encounter tokens may be monitored as a way to assess the efficiency of this communication media.

In the above, it should be understood that all data items are stored on a tangible memory medium. Such tangible memory medium may be realized in any way suitable, that is by means of a hard disk drive, a solid-state drive, a flash memory, a memory embedded in a processor, a distant storage accessible in the cloud, etc.

Similarly, most of the above functions and operations are meant to be performed by computer programs which are executed on one or more processors. Such processors include any means known for performing automated calculus, such as CPUs, GPUs, CPUs and/or GPUs grids, remote calculus grids, specifically configured FPGAs, specifically configured ASICs, specialized chips such as SOCs or NOCs, AI specialized chips, etc.

While the above participating devices are described as smartphones running an application, any mobile device with wireless capabilities could implement the method according to the invention.

**Claims**

1. A computer implemented method for anonymous proximity tracing comprising:

   a) providing a plurality of participating devices (2) being capable of wireless communication, each having a non-interactive key exchange protocol interface which includes a private key generator and non-interactive key exchange protocol parameters;
   b) periodically using the private key generator in each of said participating devices to obtain respective current private keys, computing a respective current public key in each of said participating device based on said respective current private key and said non-interactive key exchange protocol parameters, and periodically and wirelessly broadcasting said respective current public key by each said participating device;
   c) upon detection by a first participating device of a respective current public key broadcast by a second participating device, at each of said first participating device and second participating device:

      i. computing a current shared secret defined by the non-interactive key exchange protocol parameters and respective current private keys of said first participating device and said second participating device, ii.computing at least one token using a pseudo-random function parametrized with said current shared secret and applied on a bucket value, and

d) selectively uploading at least some of said at least one token computed by a given participating device to a reporting server (4) upon detection of an uploading condition by said given participating device,

wherein said plurality of participating devices further stores a first encounter token list and a second encounter token list, step c)ii. comprises computing a first token using a pseudo-random function parametrized with said current shared secret and applied on a first bucket value, and a second token using said pseudo-random function parametrized with said current shared secret and applied on a second bucket value, step c) further comprises c)iii. computing a sorting value determined by applying a total ordering function using two inputs known by both said first participating device and said second participating device, and, based on said sorting value, either storing said first token in said first encounter token list of said first participating device and in said second encounter token list of said second participating device, and said second token in said second encounter token list of said first participating device and in said first encounter token list of said second participating device, or storing said first token in said second encounter token list of said first participating device and in said first encounter token list of said second participating device, and said second token in said first encounter token list of said first participating device and in said second encounter token list of said second participating device, and step d) comprises selectively uploading at least part of one of said first encounter token list or said second encounter token list by a given participating device to the reporting server upon detection of an uploading condition by said given participating device

2. Method according to claim 1, wherein the total ordering function computes the sorting value by comparing values derived from the respective current public keys of said first participating device and said second participating device.

3. Method according to one of claim 1 or 2, wherein step d) comprises uploading tokens from the first encounter token list.

4. Method according to claim 3, further comprising
e) for each of said participating devices, periodically sending at least one token from said second encounter token list to the reporting server, and, upon the reporting server detecting that another participating device has uploaded a token from its first token encounter list identical to said at least one token from said second encounter token list, sending a message to the participating device having emitted said second encounter token list to the reporting server indicating this detection.

5. Method according to claim 3 or 4, further comprising
f) for each of said participating devices, periodically sending at least one token from said second encounter token list to the reporting server, computing a risk score based on the comparison between said at least one token from said second encounter token list and the tokens uploaded from the first encounter token list by other participating devices.

6. Method according to one of the preceding claims, wherein the non-interactive key exchange protocol is based on Curve25519, another elliptic curve, an Elliptic-curve Diffie-Hellman protocol or a Diffie-Hellman key exchange.

7. Method according to one of the preceding claims, wherein metadata relative to the colocation of said first participating device and said second participating device is stored along said first encounter token and said second encounter token in one of said first encounter token list and said second encounter token list.

8. A computer program comprising instructions to, when loaded into a computer system and executed, cause said computer system to perform the method of any of the preceding claims.

9. A data storage medium having recorded thereon the computer program of claim 8.

10. A computer system comprising a processor coupled to a memory having recorded thereon the computer program of claim 8.

**Patentansprüche**

1. Computerimplementiertes Verfahren zur anonymen Annäherungsverfolgung, umfassend:

a) Bereitstellen einer Vielzahl von teilnehmenden Vorrichtungen (2), die zur drahtlosen Kommunikation fähig sind, von denen jede eine nicht-interaktive Schlüsselaustauschprotokollschnittstelle aufweist, die einen privaten Schlüsselgenerator und nicht-interaktive Schlüsselaustauschprotokollparameter einschließt;

b) periodisches Verwenden des privaten Schlüsselgenerators in jeder der teilnehmenden Vorrichtungen, um jeweilige aktuelle private Schlüssel zu erhalten, Berechnen eines jeweiligen aktuellen öffentlichen Schlüssels in jeder der teilnehmenden Vorrichtungen auf Basis des jeweiligen aktuellen privaten Schlüssels und der nicht-interaktiven Schlüsselaustauschprotokollparameter, und periodisches und drahtloses Senden des jeweiligen aktuellen öffentlichen Schlüssels durch jede der teilnehmenden Vorrichtungen;

c) bei Erkennung eines jeweiligen aktuellen öffentlichen Schlüssels, der von einer zweiten teilnehmenden Vorrichtung gesendet wurde, durch eine erste teilnehmende Vorrichtung an jedem der ersten teilnehmenden Vorrichtung und der zweiten teilnehmenden Vorrichtung:

i. Berechnen eines aktuellen geteilten Geheimnisses, das durch die nicht-interaktiven Schlüsselaustauschprotokollparameter und die jeweiligen aktuellen privaten Schlüssel der ersten teilnehmenden Vorrichtung und der zweiten teilnehmenden Vorrichtung definiert ist,

ii. Berechnen mindestens eines Tokens unter Verwendung einer Pseudozufallsfunktion, die mit dem aktuellen geteilten Geheimnis parametrisiert ist und auf einen Bucket-Wert angewendet wird, und

d) selektives Hochladen mindestens einiger des mindestens einen Tokens, die von einer bestimmten teilnehmenden Vorrichtung berechnet wurden, auf einen Berichtsserver (4) bei Erkennung einer Hochladebedingung durch die bestimmte teilnehmende Vorrichtung,

wobei die Vielzahl teilnehmender Vorrichtungen weiter eine erste Begegnungstokenliste und eine zweite Begegnungstokenliste speichert, Schritt c)ii. das Berechnen eines ersten Tokens unter Verwendung einer Pseudozufallsfunktion umfasst, die mit dem aktuellen geteilten Geheimnis parametrisiert ist und auf einen ersten Bucket-Wert angewendet wird, und eines zweiten Tokens unter Verwendung der Pseudozufallsfunktion, die mit dem aktuellen geteilten Geheimnis parametrisiert ist und auf einen zweiten Bucket-Wert angewendet wird, Schritt c) ferner c)iii. umfasst, das Berechnen eines Sortierwerts, der durch Anwenden einer Gesamtordnungsfunktion unter Verwendung von zwei Eingaben, die sowohl der ersten teilnehmenden Vorrichtung als auch der zweiten teilnehmenden Vorrichtung bekannt sind, bestimmt wird, und auf Basis des Sortierwerts entweder Speichern des ersten Tokens in der ersten Begegnungstokenliste der ersten teilnehmenden Vorrichtung und in der zweiten Begegnungstokenliste der zweiten teilnehmenden Vorrichtung und des zweiten Tokens in der zweiten Begegnungstokenliste der ersten teilnehmenden Vorrichtung und in der ersten Begegnungstokenliste der zweiten teilnehmenden Vorrichtung, oder Speichern des ersten Tokens in der zweiten Begegnungstokenliste der ersten teilnehmenden Vorrichtung und in der ersten Begegnungstokenliste der zweiten teilnehmenden Vorrichtung, und des zweiten Tokens in der ersten Begegnungstokenliste der ersten teilnehmenden Vorrichtung und in der zweiten Begegnungstokenliste der zweiten teilnehmenden Vorrichtung, und Schritt d) das selektive Hochladen mindestens eines Teils einer von der ersten Begegnungstokenliste oder der zweiten Begegnungstokenliste durch eine bestimmte teilnehmende Vorrichtung an den Berichtsserver bei Erkennung einer Hochladebedingung durch die bestimmte teilnehmende Vorrichtung umfasst.

2. Verfahren nach Anspruch 1, wobei die Gesamtordnungsfunktion den Sortierwert durch Vergleichen von Werten berechnet, die aus den jeweiligen aktuellen öffentlichen Schlüsseln der ersten teilnehmenden Vorrichtung und der zweiten teilnehmenden Vorrichtung abgeleitet wurden.

3. Verfahren nach einem der Ansprüche 1 oder 2, wobei Schritt d) das Hochladen von Tokens aus der ersten Begegnungstokenliste umfasst.

4. Verfahren nach Anspruch 3, weiter umfassend
e) für jede der teilnehmenden Vorrichtungen periodisches Senden mindestens eines Tokens aus der zweiten Begegnungstokenliste an den Berichtsserver und, wenn der Berichtsserver erkennt, dass eine andere teilnehmende Vorrichtung ein Token aus seiner ersten Tokenbegegnungsliste hochgeladen hat, das mit dem mindestens einen Token aus der zweiten Begegnungstokenliste identisch ist, Senden einer Nachricht an die teilnehmende Vorrichtung, die die zweite Begegnungstokenliste an den Berichtsserver gesendet hat, die diese Erkennung anzeigt.

5. Verfahren nach Anspruch 3 oder 4, weiter umfassend
f) für jede der teilnehmenden Vorrichtungen periodisches Senden mindestens eines Tokens aus der zweiten Begegnungstokenliste an den Berichtsserver, Berechnen einer Risikobewertung auf Basis des Vergleichs zwischen dem mindestens einen Token aus der zweiten Begegnungstokenliste und den Tokens, die von anderen teilnehmenden Vorrichtungen aus der ersten Begegnungstokenliste hochgeladen wurden.

6. Verfahren nach einem der voranstehenden Ansprüche, wobei das nicht-interaktive Schlüsselaustauschprotokoll auf Curve25519, einer anderen elliptischen Kurve, einem Elliptic-curve-Diffie-Hellman-Protokoll oder einem Diffie-Hellman-Schlüsselaustausch basiert.

7. Verfahren nach einem der voranstehenden Ansprüche, wobei Metadaten bezüglich der Kolokation der ersten teilnehmenden Vorrichtung und der zweiten teilnehmenden Vorrichtung zusammen mit dem ersten Begegnungstoken und dem zweiten Begegnungstoken in einer der ersten Begegnungstokenliste und der zweiten Begegnungstokenliste gespeichert werden.

8. Computerprogramm, umfassend Anweisungen, die, wenn sie in ein Computersystem geladen und ausgeführt werden, das Computersystem veranlassen, das Verfahren nach einem der voranstehenden Ansprüche auszuführen.

9. Datenspeichermedium, auf dem das Computerprogramm nach Anspruch 8 aufgezeichnet ist.

10. Computersystem, umfassend einen Prozessor, der mit einem Speicher gekoppelt ist, auf dem das Computerprogramm nach Anspruch 8 aufgezeichnet ist.

**Revendications**

1. Procédé mis en œuvre par ordinateur pour le traçage de proximité anonyme comprenant :

a) fourniture d'une pluralité de dispositifs participants (2) capables de communiquer sans fil, chacun ayant une interface de protocole d'échange de clés non interactif, comprenant un générateur de clés privées et des paramètres du protocole d'échange de clés non interactif ;

b) utilisation périodique du générateur de clés privées dans chacun desdits dispositifs participants pour obtenir des clés privées actuelles respectives, calcul d'une clé publique actuelle respective dans chacun desdits dispositifs participants en fonction de ladite clé privée actuelle respective et desdits paramètres du protocole d'échange de clés non interactif, et diffusion périodique et sans fil de ladite clé publique actuelle respective par chacun desdits dispositifs participants ;

c) lors d'une détection par un premier dispositif participant d'une clé publique actuelle respective diffusée par un second dispositif participant, au niveau de chacun desdits premier et second dispositifs participants :

i. calcul d'un secret partagé actuel défini par les paramètres du protocole d'échange de clés non interactif et les clés privées actuelles respectives dudit premier dispositif participant et dudit second dispositif participant,
ii. calcul d'au moins un jeton à l'aide d'une fonction pseudo-aléatoire paramétrée avec ledit secret partagé actuel et appliquée à une valeur de compartiment, et

d) téléversement sélectif d'au moins une partie dudit au moins un jeton calculé par un dispositif participant donné vers un serveur de rapport (4) lors d'une détection d'une condition de téléversement par ledit dispositif participant donné,

dans lequel

ladite pluralité de dispositifs participants stocke en outre une liste de premiers jetons de rencontre et une liste de seconds jetons de rencontre, l'étape c)ii. comprenant le calcul d'un premier jeton à l'aide d'une fonction pseudo-aléatoire paramétrée avec ledit secret partagé actuel et appliquée à une première valeur de compartiment, et d'un second jeton à l'aide de ladite fonction pseudo-aléatoire paramétrée avec ledit secret partagé actuel et appliquée à une seconde valeur de compartiment, l'étape c) comprenant en outre c)iii. calcul d'une valeur de tri déterminée par l'application d'une fonction d'ordonnancement en utilisant deux entrées connues à la fois par ledit premier dispositif participant et ledit second dispositif participant, et, en fonction de ladite valeur de tri, ou bien le stockage dudit premier jeton dans ladite liste des premiers jetons de rencontre dudit premier dispositif participant et dans ladite liste des seconds jetons de rencontre dudit second dispositif participant, et dudit second jeton dans ladite liste des seconds jetons de rencontre dudit premier dispositif participant et dans ladite liste des premiers jetons de rencontre dudit second dispositif participant, ou bien le stockage dudit premier jeton dans ladite liste des seconds jetons de rencontre dudit premier dispositif participant et dans ladite liste des premiers jetons de rencontre dudit second dispositif participant, et dudit second jeton dans ladite liste des premiers jetons de rencontre dudit premier dispositif participant et dans ladite liste des seconds jetons de rencontre dudit second dispositif participant, et l'étape d) comprenant le téléversement sélectif d'au moins une partie de ladite liste des premiers jetons de rencontre ou de ladite liste des seconds jetons de rencontre par un dispositif participant donné vers le serveur de rapport lors de la détection d'une condition de téléversement par ledit dispositif participant donné.

2. Procédé selon la revendication 1, dans lequel la fonction d'ordonnancement total calcule la valeur de tri en comparant les valeurs dérivées des clés publiques actuelles respectives dudit premier dispositif participant et dudit second dispositif participant.

3. Procédé selon l'une des revendications 1 ou 2, dans lequel l'étape d) comprend le téléversement de jetons de la liste des premiers jetons de rencontre.

4. Procédé selon la revendication 3, comprenant en outre
   e) pour chacun desdits dispositifs participants, envoi périodique d'au moins un jeton de ladite liste des seconds jetons de rencontre vers le serveur de rapport, et, lorsque le serveur de rapport détecte qu'un autre dispositif participant a téléversé un jeton de sa liste des premiers jetons de rencontre identique audit au moins un jeton de ladite liste des seconds jetons de rencontre, envoi d'un message indiquant cette détection au dispositif participant ayant transmis ladite liste des seconds jetons de rencontre au serveur de rapport.

5. Procédé selon la revendication 3 ou 4, comprenant en outre
   f) pour chacun desdits dispositifs participants, envoi périodique d'au moins un jeton de ladite liste des seconds jetons de rencontre vers le serveur de rapport, calcul d'un score de risque basé sur la comparaison entre ledit au moins un jeton de ladite liste des seconds jetons de rencontre et les jetons téléversés à partir de la liste des premiers jetons de rencontre par d'autres dispositifs participants.

6. Procédé selon l'une quelconque des revendications précédentes, dans lequel le protocole d'échange de clés non interactif est basé sur Curve25519, une autre courbe elliptique, un protocole Diffie-Hellman à courbe elliptique ou un échange de clés Diffie-Hellman.

7. Procédé selon l'une quelconque des revendications précédentes, dans lequel des métadonnées relatives à la colocation dudit premier dispositif participant et dudit second dispositif participant sont stockées avec ledit premier jeton de rencontre et ledit second jeton de rencontre dans l'une de ladite liste des premiers jetons de rencontre et ladite liste des seconds jetons de rencontre.

8. Programme informatique comprenant des instructions qui, lorsqu'elles sont chargées dans un système informatique et exécutées, font en sorte que ledit système informatique mette en œuvre le procédé décrit dans l'une quelconque des revendications précédentes.

9. Support de stockage de données sur lequel est enregistré le programme informatique de la revendication 8.

10. Système informatique comprenant un processeur couplé à une mémoire dans laquelle est enregistré le programme informatique de la revendication 8.

Fig.1

Fig.2

Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ROBERT**. *ROBust and privacypresERving proximity Tracing*, 18 April 2020
- **OLLIKAINEN, V.** ; **HALUNEN, K.** Rendezvous based pandemic tracing by sharing Diffie-Hellman generated common secrets. *VTT Technical Research Centre of Finland.*, 2020

- **SERGE VAUDENAY**. Analysis of DP3T. *Cryptology ePrint Archive*, 2020
- Non-Interactive Key Exchange. **FREIRE E.S.V.** ; **HOFHEINZ D** ; **KILTZ E** ; **PATERSON K.G**. Public-Key Cryptography - PKC 2013. PKC 2013. Lecture Notes in Computer Science. Springer, 2013, vol. 7778